Europäisches Patentamt

European Patent Office

Office européen des brevets

(19)

(11) Veröffentlichungsnummer: **0 280 177 B1**

(12) **EUROPÄISCHE PATENTSCHRIFT**

(45) Veröffentlichungstag der Patentschrift: **11.11.92**

(51) Int. Cl.5: **G03B 42/04**

(21) Anmeldenummer: **88102315.4**

(22) Anmeldetag: **18.02.88**

(54) **Vorrichtung zum Entladen von Röntgenblattfilmkassetten.**

(30) Priorität: **25.02.87 DE 3706046**

(43) Veröffentlichungstag der Anmeldung:
**31.08.88 Patentblatt 88/35**

(45) Bekanntmachung des Hinweises auf die
Patenterteilung:
**11.11.92 Patentblatt 92/46**

(84) Benannte Vertragsstaaten:
**ES FR GB IT**

(56) Entgegenhaltungen:
**EP-A- 0 104 419**
**DE-A- 3 000 760**
**DE-C- 3 527 549**
**DE-U- 8 434 977**
**US-A- 3 828 195**

**PATENT ABSTRACTS OF JAPAN, Band 10,**
**Nr. 60 (P-435)[2117], 11. März 1986; & JP-A-60**
**203 928**

(73) Patentinhaber: **Agfa-Gevaert AG**

**W-5090 Leverkusen 1(DE)**

(72) Erfinder: **Schmidt, Manfred, Dipl.-Ing.**
**Ligusterweg 34**
**W-8011 Kirchheim(DE)**
Erfinder: **Zanner, Johann**
**Albert-Schweitzer-Strasse 1a**
**W-8025 Unterhaching(DE)**

## Beschreibung

Die Erfindung betrifft eine Vorrichtung zum Entladen von Röntgenblattfilmkasssetten mit einem Schacht zur Aufnahme einer Kassette, mit Mitteln zum Ein- und Ausfahren der Kassette, mit Mitteln zum lichtdichten Verschließen des Schachtes, einer Öffnungseinrichtung für die einen Bodenteil und einen anhebbaren Deckel aufweisende Kassette, mit einem Gebläse, das wenigstens eine zwischen das Bodenteil und den teilweise angehobenen Deckel gerichtete Düse aufweist, zum Separieren eines zu entladenden Films und mit Mitteln zur Entnahme des Films aus der Kassette sowie mit einer elektrischen oder elektronischen Steuervorrichtung, durch die diese Mittel und Einrichtungen folgegerecht nacheinander steuerbar sind.

Eine Vorrichtung der eingangs genannten Art ist beispielsweise bekannt durch die US-A 3,828,195. Dabei ist die zu entleerende Kassette mit ihrem Bodenteil in Filmausgaberichtung nach unten geneigt und soll offenbar aufgrund ihrer Neigung in ihrer geöffneten Stellung das Herausgleiten des Films zu einem Transportrollenpaar veranlassen. Damit nun der Film nicht an der Kassette bei ungünstigen Luftverhältnissen hängenbleibt und daher nicht aus der Kassette herausgleitet, wird ein Luftstrom vor der Kassettenstirnseite nach aufwärts gerichtet, der den Film abblättern soll.

Eine andere ähnliche Vorrichtung ist durch die DE-U 84 34 977 für eine Kassette mit stirnseitigem, verschließbarem Filmein- und -ausführschlitz bekannt geworden, wobei die Kassette mit ihrem Schlitz zum Entladen senkrecht nach unten gerichtet wird und der Film aufgrund der Schwerkraft von selbst herausfallen soll. Um die Haftung des Films an den inneren Kassettenflachseiten zu beseitigen, wird Blasluft gegen den Schlitz gerichtet.

Bei Kassettenentladevorrichtungen, in denen eine zu entladende Kassette horizontal liegt und einen anhebbaren, z. B. schwenkbaren Deckel aufweist, stört jedoch ein anderer, spezifischer Hafteffekt zwischen Kassette und Film. Hier haftet regelmäßig der Film am Deckel bzw. der deckelseitigen Verstärkerfolie, obgleich diese entgegen der Schwerkraft nach oben angehoben werden. Löst er sich nicht rasch genug ab und fällt dann in das Bodenteil zurück, so erfaßt ein der Filmentnahme dienender Sauger nicht den zu entladenden Film, sondern die bodenseitige Verstärkerfolie. Dies führt bei den heutigen, sehr schnell arbeitenden Entladevorrichtungen zu sehr unangenehmen Funktionsstörungen, die zur Zerstörung eines belichteten Film und der Kassette führen können. Um dieses Anhaften des Films am Kassettendeckel zu verhindern, wurden schon verschiedene Maßnahmen realisiert, z. B. die Anordnung von Saugnäpfen am Bodenteil etwa gemäß der DE-C 35 27 549. Die Oberkanten dieser Saugnäpfe nützen sich jedoch im Laufe des langen und häufigen Gebrauchs ab und erfüllen dann ihre Funktion zunehmend weniger sicher.

Der Erfindung liegt daher die Aufgabe zugrunde, eine Vorrichtung der eingangs genannten Art so auszubilden, daß nicht nur ein allmähliches Abblättern eines irgendwie in der geöffneten Kassette haftenden Films erreicht wird, sondern daß in kürzester Zeit speziell ein üblicherweise am aufwärts bewegten Kassettendeckel bzw. an dessen Verstärkerfolie haftender Film auf den Kassettenboden zurückgezogen wird und die Funktionsfähigkeit von zu entladenden Kassetten keinen Abnützungserscheinungen unterworfen ist.

Diese Aufgabe wird erfindungsgemäß gelöst durch die Merkmale des Hauptanspruchs. Weitere vorteilhafte Merkmale der Erfindung sind den Unteransprüchen entnehmbar.

Durch die erfindungsgemäße kurzzeitige Anschaltung eines gerichteten Luftstromes bläst dieser nicht einfach gegen die Stirnseite eines zu entladenden Filmblattes und wirbelt dieses allmählich frei, sondern es wird nach dem Prinzip einer Wasserstrahlpumpe bzw. des Hydrodynamischen Paradoxons durch den Luftstrahl rund um diesen und damit unter dem zu separierenden Film ein Unterdruck erzeugt, der den Film sehr schnell und unter Mitwirkung der Schwerkraft ins Bodenteil zurücksaugt. Sollte in Ausnahmefällen der Film im Bodenteil liegenbleiben, so daß der Luftstrahl auf die obere Filmseite trifft, so reicht der hierbei ebenfalls entstehende Unterdruck nicht aus, um den Film entgegen der Schwerkraft, also entgegen seinem Eigengewicht gegen den aufschwenkenden Deckel zu ziehen. Der Film bleibt also in diesem Falle im Bodenteil liegen. Der durch den Luftstrahl erzeugte Unterdruck ist also ausreichend, um die Haftung zwischen Film und Deckel äußerst schnell zu überwinden und den Film unter Ausnutzung von dessen Eigengewicht nach unten zu ziehen; er ist aber nicht groß genug, um den Film entgegen seinem Eigengewicht anzuheben, wenn der Film im Bodenteil liegen geblieben sein sollte.

Die Erfindung wird anhand von Zeichnungen näher erläutert. Es zeigen

Fig.1      eine abgebrochene perspektivische Prinzipdarstellung einer erfindungsgemäßen Anordnung,

Fig.2      einen Schnitt durch einen Ausschnitt einer möglichen erfindungsgemäßen Kassettenentladevorrichtung parallel zur Entladerichtung,

Fig. 3      eine stark verkleinerte Draufsicht auf eine mögliche erfindungsgemäße Entladevorrichtung unter Berücksichtigung verschiedener Kassettenformate.

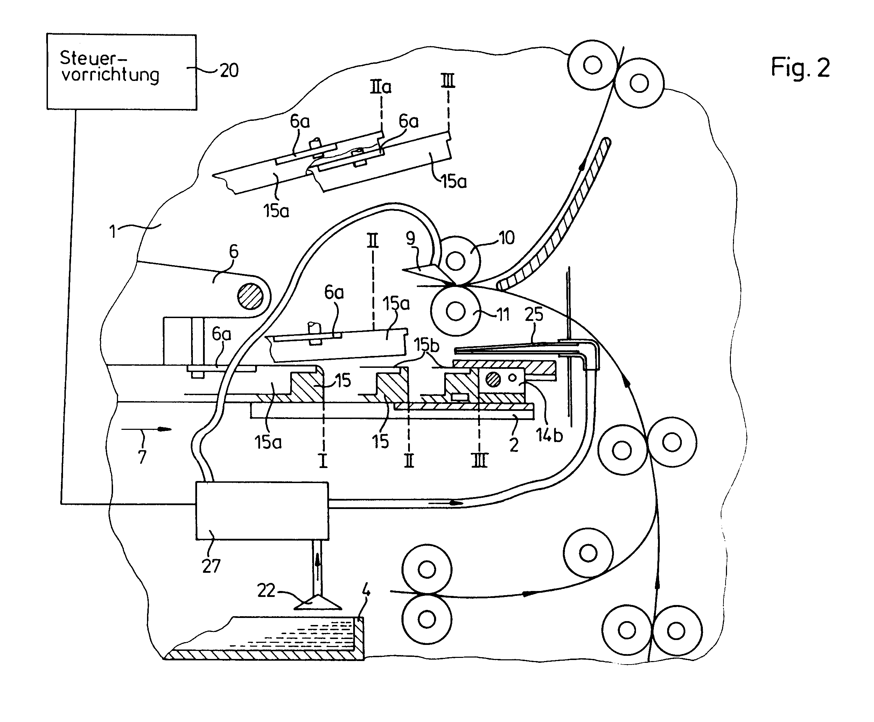

Zur Erläuterung von möglichen Ausführungsformen der Erfindung wurde in den Fig.2 und 3 ausgegangen von einer Röntgenfilmkassettenbe- und -entladevorrichtung etwa nach der DE-C 32 32 187. Nach dem nachfolgend geschilderten Prinzip läßt sich die Erfindung aber auch bei allen anderen bekannten Planfilmkassettenentladegeräten für Kassetten mit anhebbarem Deckel anwenden. In der Beschreibung werden nur die wichtigsten Merkmale derartiger bekannter Kassettenentladevorrichtungen erwähnt, soweit sie zum Verständnis der gezeigten Ausführungsbeispiele nach der Erfindung erforderlich sind.

Dabei sind ein Schacht 1 zur Aufnahme jeweils einer Kassette, irgendwelche bekannte Transportmittel 2 zum Ein- und Ausführen einer Kassette, die am Schachtboden angeordnete Transportwalzen aufweisen können, und nicht gezeigte Mittel zum lichtdichten Verschließen des Schachtes 1 vorgesehen. Stirnseitig im Schacht sind bekannte Mittel zum Entriegeln einer an einem später zu beschreibenden Anschlag angelangten Kassette vorgesehen, die beispielsweise so wirken können, daß Schieber eine nicht gezeigte Verzahnung aufweisen, mit der sie in die Riegel der Kassette eingreifen und dann durch eine Bewegung quer zur Kassettentransportrichtung 7 die Riegel betätigen, so daß der Kassettendeckel z. B. unter der Wirkung schwacher Federn aufspringt oder durch an schwenkbaren Seitenteilen 6 angeordnete Haken 6a angehoben wird.

Eines der Öffnungsmittel muß in nicht gezeigter Weise in der zur Kassetteneingaberichtung 7 transversalen Richtung 8 derart verschiebbar sein, daß die Öffnungsvorrichtung an die unterschiedlichen, in der Vorrichtung verwendbaren Kassettenformate automatisch anpaßbar ist. Stirnseitig über und/oder vor der Vorrichtung zum Öffnen einer Kassette sind bekannte Mittel 9, 10, 11 zum Entnehmen eines Filmblattes aus der Kassette und zum Einführen eines neuen Filmblattes in die Kassette angeordnet. Diese Ent- und Belademittel bestehen meist aus geeignet angeordneten und durch eine elektronische Steuervorrichtung 20 gesteuerten Saugern 9 und diesen zugeordneten Transportwalzenpaaren 10, 11. Im übrigen sind in bekannter und daher nur angedeuteter Weise Blattfilmvorratsmagazine 4 vorgesehen, die Filme der verschiedenen Formate enthalten, mit denen die in der Vorrichtung verwendbaren Kassetten der unterschiedlichen Formate beladen werden sollen. Außerdem ist in nicht gezeigter Weise entweder ein Zwischenmagazin zum Sammeln der den Kassetten entnommenen Filme vorgesehen oder es ist eine Entwicklungsmaschine für die entnommenen Filme direkt angeschlossen.

Die Ermittlung des Formates einer eingegebenen Kassette und die Auswahl und Zuführung eines hierzu passenden neuen Filmblattes erfolgt automatisch, z. B. nach automatischer Ausmessung mindestens einer Kassettenseite. Vor oder bei Ermittlung des Formats einer eingegebenen Kassette muß diese genau positioniert sein.

Somit ist eine zur Eingaberichtung 7 transversale Verschiebeeinrichtung erforderlich, die in Pfeilrichtung 8 hin- und herbewegbar sein muß. Diese transversale Verschiebeeinrichtung weist z. B. eine als rechtwinkeliges Winkelstück 12a, 12b ausgebildete Klemmbacke 12 auf, die mit den übrigen verschiebbaren Teilen, z. B. 6, 6a, zum Positionieren einer Kassette 15 verbunden ist. Die verschiebbare Klemmbacke 12 ist gegenüber einer weiteren, bezüglich der transversalen Verschieberichtung 8 festen, ebenfalls als rechtwinkeliges Winkelstück 14a, 14b ausgebildeten Klemmbacke 14 verschiebbar. Die Schenkel 14a, 14b bilden dabei einen seitlichen und stirnseitigen Anschlag für die mittels der Transportmittel in den Schacht 1 transportierte Kassette 15. Die beiden Klemmbacken 12, 14 sind so angeordnet, daß ihre aufeinander zu gerichteten Schenkel 12b, 14b miteinander fluchten. Eine gegen die Anschläge 14a, 14b transportierte Kassette wird beim Hinbewegen der Klemmbacke 12 also einfach geklemmt und dadurch positioniert. Eine irgendwie zwischen der Klemmbacke 14 und der in Ausgangsstellung befindlichen, verschiebbaren Klemmbacke 12 antransportierte Kassette wird beim Bewegen der Klemmbacke 12 unter der zusätzlichen Wirkung der Transportmittel gegen die Anschläge 14b, 12b bewegt und zwischen den Schenkeln 14a, 12a ausgerichtet. An den stirnseitigen Schenkeln 14b, 12b und ggf. bei sehr unterschiedlich großen Kassetten dazwischen sind Schaltkontakte vorgesehen, die beim Eintreffen einer neu eingegebenen Kassette 15 den Antrieb für die verschiebbare Klemmbacke 12, 14, 6 einschalten. Weitere Schalter können beispielsweise als Lichtschranken oder Mikroschalter ausgebildet sein, die bei der Positionierbewegung einer Kassette von Schaltfahnen durchlaufen werden und über die elektronische Steuervorrichtung 20 das Kassettenformat ermitteln. Natürlich kann auch jede andere bekannte Vorrichtung zur Kassettenformatermittlung und Kassettenpositionierung verwendet werden.

Gemäß Fig.2 kann es in bekannter Weise zweckmäßig sein, eine Kassette 15 mit schwenkbarem oder anhebbarem Deckel 15a von einer ersten Anschlagposition I, in der die transversale Verschiebeeinrichtung 12 eingeschaltet wird, in eine zweite Stellung II zu verschieben, in der der Deckel 15a einen kleinen Spalt geöffnet ist, und dann den Deckel 15a in der Stellung IIa voll zu öffnen, so daß durch einen Sauger 9 ein belichteter Film aus der Kassette entnommen wird, und dann die Kassette 15 in eine dritte Stellung III in Richtung 7

weiterzubewegen, in der ein neues Filmblatt in den Kassettenbodenteil 15d eingegeben wird. Zum Abtransport des belichteten Films und zur Eingabe eines neuen Films dient dabei vor der Kassettenstirnseite bzw. deren Oberkante 15b ein Transportwalzenpaar 10, 11. Dabei ist mit 22 beispielhaft noch ein Sauger angegeben, der zur Entnahme eines neuen Filmblattes aus einem entsprechenden Vorratsmagazin 4 dient und dass Blatt einem Transportwalzensystem zuführt, über das es schließlich zum Eingabewalzenpaar 10, 11 gelangt.

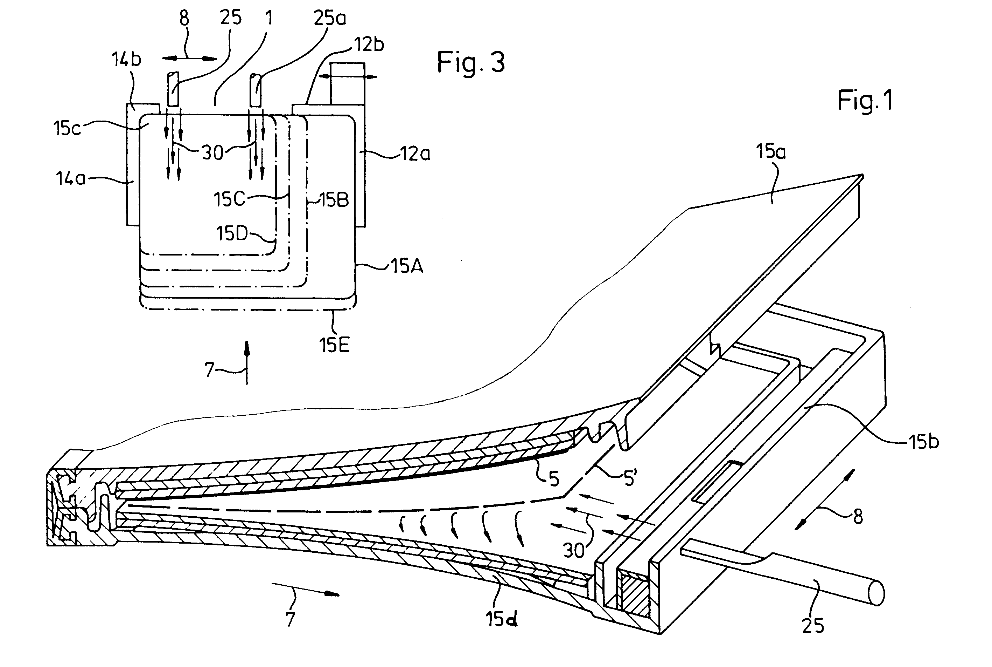

Nach der Erfindung ist nun gemäß den Fig.1 bis 3 mindestens eine Düse 25 vor und oberhalb der stirnseitigen Oberkante 15b des Kassettenbodenteils 15d vorgesehen. Die Düse 25 ist in Filmeingaberichtung 26 (etwa parallel zu Pfeilrichtung 7) ausgerichtet und mit derselben Luftpumpe 27 verbunden wie die Sauger 9, 22. Die Luftpumpe 27 ist mit der elektronischen Steuervorrichtung 20 verbunden, so daß sie bzw. die Sauger und die Düse 25 entsprechend ihrer Funktion von der elektronischen Steuervorrichtung 20 ein- bzw. abgeschaltet werden. Dabei sind die Sauger an den Ansaugstutzen der Pumpe und die Düse an die Abblasseite der Pumpe 27 angeschlossen.

Die Düse 25 wird nun von der Steuervorrichtung 20 kurzzeitig eingeschaltet, wenn sich die Kassette 15 und der Deckel 15a in der Stellung II befinden, der Deckel 15a also gemäß den Fig.1 und 2 nur einen kleinen Spalt geöffnet ist. Dabei haftet gewöhnlich der zu entladende Film 5 am Kassettendeckel 15a. Würde er bei weiterem Öffnen des Deckels 15a, vgl. Stellung IIa, nicht vom Deckel abgefallen sein, so würde der Sauger 9 nicht den Film 5 ansaugen und der Kassette 15 entnehmen, sondern statt dessen die bodenseitige Verstärkerfolie erfassen. Dies könnte zur Zerstörung des Films und der Kassette führen. Die Düse 25 ist nun so angeordnet, daß sie unmittelbar über der Oberkante 15b des Bodenteils 15d unterhalb der Unterkante des Deckels 15a und damit unterhalb des daran haftenden, zu entnehmenden Films 5 in die Kassette bläst. Ihr Luftstrahl 30 ist scharf ausgerichtet bzw. gebündelt und vergleichsweise sehr stark. Durch die Lage der Düse 25 bläst der Luftstrahl 30 bei Kassetten mit schwenkbarem Deckel in Richtung auf den sich keilförmig verengenden Spalt zwischen Bodenteil und Deckel. Durch die geringfügige Höhe dieses Spaltes und ihre zunehmende Verringerung wirkt der scharfe Luftstrahl 30 der Düse 25, der nur kurzzeitig eingeschaltet ist, nach dem Prinzip einer Wasserstrahlpumpe bzw. nach dem des Hydrodynamischen Paradoxons. Der Luftstrahl 30 reißt nämlich die seitlich von ihm vorhandene Luft mit und erzeugt so in seiner Umgebung einen Unterdruck. Dieser nun unterhalb des am Deckel 15a haftenden Films 5 entstehende Unterdruck reicht aus, um zusammen mit dem Eigengewicht des Films 5 diesen mit großer Geschwindigkeit und absoluter Zuverläßigkeit vom Deckel 15a loszureißen und auf den Boden des Bodenteils 15d zurückzuziehen. Um diese Wirkung anzudeuten, ist in Fig.1 der unter dem Sog des Luftstrahles 30 nach abwärts gezogene Film gestrichelt in einer Zwischenstellung 5′ gezeichnet. Bis der Deckel 15a ausreichend weit zur Entnahme des Films 5 geöffnet ist, vgl. Stellung IIa, liegt der zu entnehmende Film sicher und zuverläßig auf dem Boden des Bodenteils 15d zur Entnahme durch den Sauger 9 bereit, trotz der hohen Geschwindigkeiten, mit denen diese Vorgänge vor sich gehen.

Es hat sich nun gezeigt, daß zum sicheren Abziehen des Films 5 vom nur einen Spalt geöffneten Deckel 15a der Luftstrahl 30 einer einzigen, geeignet dimensionierten Düse 25 ausreichend ist, wenn der Strahl scharf genug und die Düse 25 an geeigneter Stelle angeordnet ist. Eine derart geeignete Stelle liegt neben der festen Klemmbacke 14a, 14b vor dem Spalt nahe derjenigen stirnseitigen Ecke des Schachtes 1, an der die Ecken 15c der Kassetten 15 sämtlicher Kassettenformate 15A bis 15E positioniert werden. Natürlich wäre es auch möglich, eine einzige oder eine zweite Düse 25a nahe der der Ecke 15c benachbarten stirnseitigen Ecke neben der verschiebbaren Klemmbacke 12a, 12b anzuordnen. Dies würde aber bedeuten, daß zur Anpassung an die verschiedenen verwendbaren Kassettenformate 15A bis 15E eine derart anzuordnende Düse zusammen mit der verschiebbaren Klemmbacke 12a, 12b verschiebbar sein müßte. Es ist aber auch denkbar, daß eine zweite Düse 25a fest nahe der Stelle vorgesehen ist, die der der positionierten Ecke 15c benachbarten stirnseitigen Ecke einer positionierten Kassette vom kleinsten Format 15D, naturgemäß innerhalb der Kassettenbreite liegend, entspricht, vgl. Fig.3. Bei Verwendung der Kassetten der größeren Formate wirkt der Luftstrom 30 dieser Düse 25a dann je nach der Kassettengröße mehr im mittleren Bereich der Kassette bzw. des Films. Bei geeigneter Dimensionierung der Düse 25a und ihres Luftstromes könnte aber auch sie allein (ohne die Düse 25) die erforderliche Separierung bewirken.

Selbstverständlich sind noch andere als die gezeigten Ausführungsbeispiele möglich. So ist es für die Erfindung nicht erforderlich, daß die Kassetten 15 gemäß Fig. 2 in die Positionen I, II, IIa und III bewegt werden. Erforderlich ist nur, daß die Blasluft bei nur geringfügig geöffnetem Deckel 15a eingeschaltet wird. Als besonders günstig hat sich ein stirnseitiger Spalt zwischen Bodenteil 15d und Deckel 15a von nicht mehr als 10 mm erwiesen. Für den Luftstrahl 30 hat sich ein Druck von 4 bis 7 bar als besonders geeignet herausgestellt.

Ist eine Entladevorrichtung derart ausgebildet, daß der Transport einer zu entladenden Kassette zwar in Richtung 7 erfolgt, der Deckel aber um eine Achse parallel zur Richtung 7 schwenkbar ist, so ist die Blasdüse naturgemäß an einer in Richtung 7 verlaufenden Schachtwand gegenüber der Deckelachse anzuordnen. Die erfindungsgemäße Vorrichtung funktioniert auch dann, wenn statt des schwenkbaren Kassettendeckels ein voll vom Kassettenboden abhebbarer Deckel vorgesehen ist, der z. B. mittels Saugern angehoben und in der angehobenen Stellung gehalten wird. Nur müßte in diesem Falle bei der Dimensionierung des Luftstromes berücksichtigt werden, daß dieser nicht in einen keilförmig sich verengenden Spalt, sondern in einen Spalt konstanter Höhe eingeblasen wird.

**Patentansprüche**

1. Vorrichtung zum Entladen von Röntgenblattfilmkassetten mit einem Schacht (1) zur Aufnahme einer Kassette (15), mit Mitteln zum Ein- und Ausfahren der Kassette (15), mit Mitteln zum lichtdichten Verschließen des Schachtes (1), einer Öffnungseinrichtung für die einen Bodenteil (15d) und einen anhebbaren Deckel (15a) aufweisende Kassette (15), mit einem Gebläse (27), das wenigstens eine zwischen das Bodenteil (15d) und den teilweise angehobenen Deckel (15a) gerichtete Düse (25) aufweist, zum Separieren eines zu entladenden Films (5) und mit Mitteln zur Entnahme des Films (5) aus der Kassette (15) sowie mit einer elektrischen oder elektronischen Steuervorrichtung (20), durch die diese Mittel und Einrichtungen folgegerecht nacheinander steuerbar sind, dadurch gekennzeichnet, daß die Düse (25) zum Separieren des Films (5) vom Deckel (15a) oder einer deckelseitigen Verstärkerfolie derart angeordnet und ausgebildet ist, daß ihr Blasluftstrom (30) unterhalb des am Deckel (15a) haftenden Films (5) in einen Spalt zwischen Bodenteil (15d) und Deckel (15a) als scharfer Luftstrom einblasbar ist, und daß der Blasluftstrom (30) durch die Steuervorrichtung (20) bei Entstehen des Spaltes kurzzeitig einschaltbar ist, so daß durch einen seitlich des Blasluftstromes (30) entstehenden Unterdruck zwischen Film (5) und Bodenteil (15d) der Film (5) vom Deckel (15a) bzw. von der deckelseitigen Verstärkerfolie nach unten absaugbar ist.

2. Vorrichtung zur Entladung von Kassetten unterschiedlicher Formate, die je an einer in Kassetteneingaberichtung stirnseitigen, für alle Kassetten gleichliegenden Kassettenecke positionierbar sind, nach Anspruch 1, dadurch gekennzeichnet, daß die Düse (25) entgegen der Kassetteneingaberichtung (7) gerichtet und nahe der zu positionierenden bzw. positionierten Kassettenecke (15c) im Schacht (1) angeordnet ist.

3. Vorrichtung zur Entladung von Kassetten unterschiedlicher Formate, die je an einer in Kassetteneingaberichtung stirnseitigen, für alle Kassetten gleichliegenden Kassettenecke positionierbar sind, nach Anspruch 1, dadurch gekennzeichnet, daß die Düse (25a) entgegen der Kassetteneingaberichtung (7) gerichtet und in einer Lage im Schacht (1) angeordnet ist, die nahe der der positionierbaren Kassettenecke (15c) benachbarten, stirnseitigen Kassettenecke einer positionierten Kassette des Kleinsten vorkommenden, quer zur Kassetteneingaberichtung (7) gemessenen Kassettenformats (15D) zwischen deren beiden stirnseitigen Kassettenecken liegt.

4. Vorrichtung nach den Ansprüchen 2 und 3, dadurch gekennzeichnet, daß eine Düse (25) nahe der positionierten Kassettenecke (15c) und eine zweite Düse (25a) nahe der ersterer benachbarten, stirnseitigen Kassettenecke einer positionierten Kassette des kleinsten Formats (15D) angeordnet ist.

5. Vorrichtung mit einer zur Kassetteneingaberichtung transversalen Verschiebevorrichtung zur Positionierung der Kassetten nach einem der vorhergehenden Ansprüche, dadurch gekennzeichnet, daß eine Düse und der transversalen Verschiebevorrichtung (12a, 12b) zusammen mit dieser verschiebbar gelagert ist.

6. Vorrichtung für Kassetten mit schwenkbaren Deckeln nach einem der vorhergehenden Ansprüche, dadurch gekennzeichnet, daß der Kassettendeckel (15a) je um die in Kassetteneingaberichtung (7) gesehen rückwärtige, zur Kassetteneingaberichtung (7) senkrechte Kassettenseite schwenkbar ist.

7. Vorrichtung für Kassetten mit schwenkbaren Deckeln nach Anspruch 1, dadurch gekennzeichnet, daß der Kassettendeckel um eine zur Kassetteneingaberichtung (7) parallele Kassettenseite schwenkbar ist und daß die Düse oder die Düsen quer zur Kassetteneingaberichtung (7) und vor der zu der die Deckelschwenkachse aufweisenden Kassettenseite parallelen Kassettenseite angeordnet sind.

8. Vorrichtung mit Saugern zum Entnehmen eines Films aus einer Kassette und/oder aus einem Filmvorratsmagazin zum Neubeladen einer Kassette nach einem der vorhergehenden Ansprüche, dadurch gekennzeichnet, daß die Saugluft der Sauger (9, 22) und die Blasluft der Düse (25) oder Düsen (25, 25a) durch eine gemeinsame Luftpumpe (27) erzeugbar ist.

9. Vorrichtung nach einem der vorhergehenden Ansprüche, dadurch gekennzeichnet, daß der Druck des Blasluftstromes (30) 4 bis 7 bar beträgt.

10. Vorrichtung nach einem der vorhergehenden Ansprüche, dadurch gekennzeichnet, daß der Spalt zwischen Bodenteil (15) und Deckel (15a) etwa 10 mm beträgt.

**Claims**

1. Device for unloading X-ray sheet film cassettes, having a shaft (1) for receiving a cassette (15), having means for moving the cassette (15) in and out, having means for light-proof closure of the shaft (1), an opening device for the cassette (15), which comprises a bottom part (15d) and a liftable lid (15a), having a blower (27), which has at least one nozzle (25) directed between the bottom part (15d) and the partially lifted lid (15a), for separating a film (5) to be unloaded, and having means for removing the film (5) from the cassette (15), as well as having an electric or electronic control device (20), by means of which said means and devices are controllable in the correct sequence, characterized in that the nozzle (25) for separating the film (5) from the lid (15a) or a lid-side reinforcing foil is disposed and designed in such a way that its air blast (30) may be injected below the film (5) adhering to the lid (15a) as a penetrative air flow into a gap between bottom part (15d) and lid (15a), and that the air blast (30) may be temporarily switched on by the control device (20) upon development of the gap so that, by means of an underpressure which arises laterally of the air blast (30) between film (5) and bottom part (15d), the film (5) may be sucked downwards from the lid (15a) or from the lid-side reinforcing foil.

2. Device for unloading cassettes of differing formats, which are each positionable with the aid of an, in cassette input direction, front cassette corner identically situated for all cassettes, according to claim 1, characterized in that the nozzle (25) is directed counter to the cassette input direction (7) and is disposed in the shaft (1) close to the cassette corner (15c) to be positioned or already in position.

3. Device for unloading cassettes of differing formats, which are each positionable with the aid of an, in cassette input direction, front cassette corner identically situated for all cassettes, according to claim 1, characterized in that the nozzle (25a) is directed counter to the cassette input direction (7) and is disposed in a location in the shaft (1), which lies close to the front cassette corner, adjacent to the positionable cassette corner (15c), of a positioned cassette of the smallest arising cassette format (15D), measured at right angles to the cassette input direction (7), between the two front corners of said cassette.

4. Device according to claims 2 and 3, characterized in that one nozzle (25) is disposed close to the positioned cassette corner (15c) and a second nozzle (25a) is disposed close to the front cassette corner, adjacent to the first cassette corner, of a positioned cassette of the smallest format (15D).

5. Device having an, in relation to the cassette input direction, transverse shifting device for positioning the cassettes, according to one of the preceding claims, characterized in that a nozzle is supported on the transverse shifting device (12a, 12b) so as to be displaceable therewith.

6. Device for cassettes with hinged lids, according to one of the preceding claims, characterized in that the cassette lid (15a) may be pivoted in each case about the, viewed in cassette input direction (7), rear cassette side lying at right angles to the cassette input direction (7).

7. Device for cassettes with hinged lids, according to claim 1, characterized in that the cassette lid may be pivoted about a cassette side lying parallel to the cassette input direction (7), and that the nozzle or the nozzles are disposed at right angles to the cassette input direction (7) and in front of the cassette side lying parallel to the cassette side having the lid swivelling axis.

8. Device with suction means for removing a film from a cassette and/or from a film supply magazine for reloading a cassette, according to one of the preceding claims, characterized in that the suction air of the suction means (9, 22) and the blast air of the nozzle (25) or nozzles (25, 25a) may be generated by a common air pump (27).

9. Device according to one of the preceding claims, characterized in that the pressure of the air blast (30) is 4 to 7 bar.

10. Device according to one of the preceding claims, characterized in that the gap between bottom part (15) and lid (15a) is approximately 10 mm.

**Revendications**

1. Dispositif pour le déchargement de cassettes de films radiographiques en feuille, comportant une alvéole (1) destinée à recevoir une cassette (15), des moyens pour l'introduction et l'extraction de la cassette (15), des moyens pour fermer de manière étanche à la lumière l'alvéole (1), un dispositif d'ouverture pour la cassette (15) pourvue d'une partie de fond (15d) et d'un couvercle (15a) susceptible d'être soulevé, comportant également un ventilateur (27) qui comprend au moins une buse (25) dirigée entre la partie de fond (15d) et le couvercle (15a) soulevé partiellement, pour séparer un film (5) à décharger, et comportant des moyens pour prélever un film (5) hors de la cassette (15), ainsi qu'un dispositif de commande électrique ou électronique (20), permettant de commander successivement ces moyens et ces dispositifs, de manière séquentielle, caractérisé en ce que la buse (25) pour séparer le film (5) du couvercle (15a) ou d'une feuille de renfort côté couvercle, est disposée et configurée de telle sorte que son courant d'air de soufflage (30) puisse être soufflé sous forme de courant d'air fortement concentré, sous le film (5) adhérant au couvercle (15a), dans une fente entre la partie de fond (15d) et le couvercle (15a), et en ce que le courant d'air de soufflage (30) peut être établi pendant un court laps de temps par le dispositif de commande (20), lors de l'apparition de la fente, de sorte que par suite de l'apparition d'une dépression entre le film (5) et la pièce de fond (15d), le film (5) est séparé du couvercle (15a) ou de la feuille de renfort côté couvercle, par aspiration vers le bas.

2. Dispositif pour le déchargement de cassettes de différents formats, qui peuvent être positionnées chacune au niveau d'un coin de cassette situé dans une position identique pour chaque cassette, du côté frontal dans la direction d'introduction de la cassette, selon la revendication 1, caractérisé en ce que la buse (25) est dirigée en sens opposé à la direction d'introduction (7) de la cassette, et est disposée à proximité du coin de cassette (15c) à positionner ou positionné, dans l'alvéole (1).

3. Dispositif pour le déchargement de cassettes de différents formats, qui peuvent être positionnées chacune au niveau d'un coin de cassette situé dans une position identique pour chaque cassette, du côté frontal dans la direction d'introduction de la cassette, selon la revendication 1, caractérisé en ce que la buse (25a) est dirigée en sens opposé à la direction d'introduction (7) de la cassette, et est disposée dans l'alvéole (1), dans une position qui est située entre les deux coins de cassette frontaux d'une cassette, à proximité du coin de cassette frontal voisin du coin de cassette (15c) pouvant être positionné, d'une cassette positionnée du plus petit format de cassette (15D) susceptible d'intervenir et mesuré transversalement à la direction d'introduction (7) de la cassette.

4. Dispositif selon les revendications 2 et 3, caractérisé en ce qu'une buse (25) est disposée à proximité du coin de cassette (15c) positionné, et une seconde buse (25a) est disposée à proximité du coin de cassette frontal, voisin du précédent, d'une cassette positionnée du plus petit format (15D).

5. Dispositif comportant un dispositif de coulissement transversal à la direction d'introduction des cassettes et destiné au positionnement des cassettes, selon l'une des revendications précédentes, caractérisé en ce qu'une buse est montée sur le dispositif de coulissement transversal (12a, 12b) en pouvant coulisser en commun avec celui-ci.

6. Dispositif pour cassettes à couvercles pivotants, selon l'une des revendications précédentes, caractérisé en ce que le couvercle de cassette (15a) de chaque cassette peut pivoter autour d'un côté de cassette situé à l'arrière en se référant à la direction d'introduction (7) de la cassette, et perpendiculaire à cette direction d'introduction (7) de la cassette.

7. Dispositif pour cassettes à couvercles pivotants, selon la revendication 1, caractérisé en ce que le couvercle de cassette peut pivoter autour d'un côté de cassette parallèle à la direction d'introduction (7) de la cassette, et en ce que la buse ou les buses sont disposées transversalement à la direction d'introduction (7) de la cassette, et devant le côté de cassette parallèle au côté de cassette comportant l'axe de pivotement du couvercle.

8. Dispositif comportant des éléments d'aspiration pour prélever un film d'une cassette et/ou d'un magasin de réserve de films pour recharger une cassette, selon l'une des revendications précédentes, caractérisé en ce que l'air d'aspiration des éléments d'aspiration (9, 22) et l'air de soufflage de la buse (25) ou des buses (25, 25a) peuvent être produits par une pompe à air commune (27).

9. Dispositif selon l'une des revendications précédentes, caractérisé en ce que la pression du courant d'air de soufflage (30) vaut de 4 à 7 bar.

10. Dispositif selon l'une des revendications précédentes, caractérisé en ce que la fente entre la partie de fond (15d) et le couvercle (15a) vaut environ 10 mm.

Fig.1

Fig. 3

Fig. 2